# EUROPEAN PATENT APPLICATION

(11) **EP 4 787 670 A1**
(43) Date of publication of application: **05.08.2026**
(21) Application number: 24878779.8
(22) Date of filing: 19.09.2024
(51) Int. Cl.: H02K 1/20, H02K 3/52, H02K 3/34, H02K 1/16, H02K 1/14, H02K 1/18

(54) **MOTOR AND POWERTRAIN**

(30) Priority: 20.10.2023 CN 202311372974
(71) Applicant: Huawei Digital Power Technologies Co., Ltd., Shenzhen, Guangdong 518043 (CN)
(72) Inventor: HUANGFU, Yuzhao, Shenzhen, Guangdong 518043 (CN); LIU, Hongbing, Shenzhen, Guangdong 518043 (CN); LI, Quanming, Shenzhen, Guangdong 518043 (CN)
(74) Representative: Pfenning, Meinig & Partner mbB
(86) International application number: PCT/CN2024/119870
(87) International publication number: WO 2025/082131

(57) **Abstract**

This application provides a motor and a powertrain. The motor includes a stator. The stator includes an end plate and a plurality of silicon steel sheets. The end plate and the plurality of silicon steel sheets are stacked in an axial direction of the motor. Each of the silicon steel sheets includes a cooling hole. The cooling hole penetrates the silicon steel sheet in the axial direction of the motor. The cooling holes of the plurality of silicon steel sheets communicate with each other. The end plate includes a through hole. The through hole penetrates the end plate in the axial direction of the motor. The through hole communicates with the cooling holes. A projection of the end plate in the axial direction of the motor is within a projection of the silicon steel sheet in the axial direction of the motor. A cross-sectional area of the end plate is less than a cross-sectional area of the silicon steel sheets. A cross section of the end plate and cross sections of the silicon steel sheets are all perpendicular to the axial direction of the motor. In this application, the end plate increases a height of the stator in the axial direction, so that the end plate can act as a barrier against insulated paint overflowing from a stator groove. The overflowing insulated paint flows to a region not covered by the end plate, to reduce a risk that the insulated paint blocks the cooling hole.

## Description

This application claims priority to Chinese Patent Application No. 202311372974.8, filed with the China National Intellectual Property Administration on October 20, 2023 and entitled "MOTOR AND POWERTRAIN", which is incorporated herein by reference in its entirety.

### TECHNICAL FIELD

This application relates to the field of motor technologies, and in particular, to a motor and a powertrain.

### BACKGROUND

A motor generates heat during working. Consequently, a temperature of the motor increases. A high temperature affects performance of the motor and reduces working efficiency of the motor. To implement heat dissipation and cooling of the motor, a stator is usually provided with a cooling channel. A cooling medium circulates in the cooling channel. When the cooling medium flows in the cooling channel, heat generated by the stator can be taken away. However, when the stator of the motor is dipped in paint, insulated paint drips into a stator winding and a gap between the stator winding and a stator groove. In a drying process of the insulated paint, there is a risk that the insulated paint in the stator groove overflows to an end of the stator and flows into the cooling channel to block the cooling channel.

### SUMMARY

This application provides a motor and a powertrain.

According to a first aspect, this application provides a motor. The motor includes a stator. The stator includes an end plate and a plurality of silicon steel sheets. The end plate and the plurality of silicon steel sheets are stacked in an axial direction of the motor. Each of the silicon steel sheets includes a cooling hole. The cooling hole penetrates the silicon steel sheet in the axial direction of the motor. The cooling holes of the plurality of silicon steel sheets communicate with each other. The end plate includes a through hole. The through hole penetrates the end plate in the axial direction of the motor. The through hole communicates with the cooling holes. A projection of the end plate in the axial direction of the motor is within a projection of the silicon steel sheet in the axial direction of the motor. A cross-sectional area of the end plate is less than a cross-sectional area of the silicon steel sheets. A cross section of the end plate and cross sections of the silicon steel sheets are all perpendicular to the axial direction of the motor.

In embodiments of this application, because the through hole in the end plate communicates with the cooling hole in the adjacent silicon steel sheet, in a region covered by the end plate, a cooling medium may enter a cooling channel formed by the cooling holes from the through hole, or the cooling medium in the cooling channel may flow out of the cooling channel from the through hole. The cooling medium can normally enter and exit the cooling channel to cool the stator. In addition, in the axial direction of the motor, because the end plate does not completely cover the silicon steel sheets, a height of the stator in the region covered by the end plate is a total height of the end plate and the plurality of silicon steel sheets, and a height of the stator in a region not covered by the end plate is a total height of the plurality of silicon steel sheets, so that an end face that is of the stator and that is close to the end plate in the axial direction is an uneven surface. The region not covered by the end plate is a concave region. When the stator and a stator winding are dipped in paint or the motor is working, a boss structure formed by the end plate can act as a barrier against insulated paint that overflows from a stator groove due to thermal expansion, so that the overflowing insulated paint flows to the concave region not covered by the end plate, to reduce a risk that the insulated paint blocks the cooling hole. The cooling channel of the motor provided in this application is not easily blocked by the insulated paint. The cooling channel is kept unblocked, to effectively cool the stator, so that the motor has higher working efficiency and a longer service life.

In an implementation, a projection of the through hole in the axial direction of the motor at least partially overlaps a projection of the cooling hole of the adjacent silicon steel sheet in the axial direction of the motor. In embodiments of this application, the through hole communicates with the cooling hole in an overlapping region of the projection of the through hole and the projection of the cooling hole. A short communication path between the through hole and the cooling hole of the adjacent silicon steel sheet leads to a short path for the cooling medium to enter the cooling channel through the through hole of the end plate and the cooling hole of the adjacent silicon steel sheet, or a short path for the cooling medium in the cooling channel to be discharged out of the cooling channel through the cooling hole of the adjacent silicon steel sheet and the through hole of the end plate, so that the cooling medium can quickly cool the stator.

In an implementation, each of the silicon steel sheets includes a yoke portion and a plurality of tooth portions that are spaced apart. An end of each of the tooth portions in a radial direction of the motor is connected to an inner circumferential surface of the yoke portion. At least one of the yoke portion and the plurality of tooth portions includes the cooling hole. If the cooling holes are distributed in the yoke portion, the yoke portion has large space for providing the cooling holes, and the end plate is easily fastened to the yoke portion of the adjacent silicon steel sheet, so that the end plate can better reduce a risk that the insulated paint blocks the cooling holes. If the cooling holes are distributed in the tooth portions, the tooth portions generate a large amount of heat when the motor is working, and providing the cooling holes in the tooth portions can effectively reduce a temperature of the stator. In addition, the cooling holes in the tooth portions are close to the stator groove, and the insulated paint overflowing from the stator groove is more likely to block the cooling holes. In embodiments of this application, disposing the end plate reduces a risk that the insulated paint blocks the cooling holes.

In an implementation, there are a plurality of cooling holes. In each of the silicon steel sheets, at least some of the cooling holes are distributed in at least some of the tooth portions. The end plate includes a body portion and a plurality of protrusions that are spaced apart. An end of each of the protrusions in the radial direction of the motor is connected to an inner circumferential surface of the body portion. The protrusion and the tooth portion are stacked in the axial direction of the motor. The body portion and the yoke portion are stacked in the axial direction of the motor. There are a plurality of through holes. At least some of the through holes are distributed in the plurality of protrusions. The at least some through holes respectively communicate with the at least some cooling holes of the adjacent silicon steel sheet.

In embodiments of this application, because the tooth portions generate a large amount of heat and the cooling holes in the tooth portions are close to the stator groove, disposing the end plate increases a height around the cooling holes in the tooth portions and reduces the risk that the insulated paint blocks the cooling holes in the tooth portions, so that a cooling channel formed by the cooling holes in the tooth portions can more effectively cool the stator.

In an implementation, in the at least some through holes, a distance between the through hole and one end of the tooth portion in the radial direction of the motor is less than a distance between the through hole and the other end of the tooth portion in the radial direction of the motor. In embodiments of this application, in the tooth portion with the cooling hole, a distance between the cooling hole and the end of the tooth portion is less than a distance between the cooling hole and the other end of the tooth portion. A short distance between the cooling hole and the yoke portion can reduce impact of providing the cooling hole on a magnetic circuit of the stator while effectively cooling the stator. In addition, the distance between the through hole and the end of the tooth portion is less than the distance between the through hole and the other end of the tooth portion. The through hole and the cooling hole may be stacked, to reduce a communication distance between the through hole and the cooling hole, thereby facilitating rapid cooling of the stator.

In an implementation, a length of the protrusion in a circumferential direction of the motor is less than a length of the tooth portion in the circumferential direction of the motor. In embodiments of this application, when the insulated paint overflows from the stator groove to the end face of the stator in the axial direction after thermal expansion, due to a small length of the protrusion in the circumferential direction, the overflowing insulated paint is easily guided to a low-lying region not covered by the protrusion, for example, between an edge of the protrusion in the circumferential direction and an edge of the tooth portion in the circumferential direction, to reduce the risk that the cooling hole is blocked.

In an implementation, a width of the protrusion in the radial direction of the motor is less than a width of the tooth portion in the radial direction of the motor. The other end that is of the protrusion and that is away from the body portion in the radial direction is spaced apart from the other end that is of the tooth portion and that is away from the yoke portion in the radial direction. The insulated paint overflowing from the stator groove can be guided to a region between the other end of the protrusion and the other end of the tooth portion, to reduce the risk that the cooling hole in the tooth portion is blocked.

In an implementation, in each of the silicon steel sheets, some of the cooling holes are distributed in the yoke portion. Some of the through holes are distributed in the body portion. The some through holes respectively communicate with the some cooling holes of the adjacent silicon steel sheet. Disposing the end plate not only reduces a risk that the cooling hole in the tooth portion is blocked, but also reduces a risk that the cooling hole in the yoke portion is blocked.

In an implementation, the yoke portion includes the inner circumferential surface and an outer circumferential surface that are opposite to each other in the radial direction of the motor. In the some through holes, a distance between the through hole and the inner circumferential surface in the radial direction of the motor is greater than a distance between the through hole and the outer circumferential surface in the radial direction of the motor. In embodiments of this application, a distance between the cooling hole distributed in the yoke portion and the inner circumferential surface is greater than a distance between the cooling hole in the yoke portion and the outer circumferential surface. Because the tooth portion is provided with the cooling hole, providing the cooling hole in the yoke portion away from the tooth portion facilitates rapid cooling of the entire stator. The through hole in the body portion is close to the outer circumferential surface of the yoke portion. The through hole and the cooling hole may be stacked, to reduce a communication distance between the through hole and the cooling hole, thereby facilitating rapid cooling of the stator.

In an implementation, the body portion further includes a flow guiding recess. The flow guiding recess is recessed from the inner circumferential surface of the body portion to an outer circumferential surface of the body portion. At least a part of a projection of the flow guiding recess in the radial direction of the motor is between projections of two adjacent tooth portions in a circumferential direction of the motor in the radial direction of the motor. In embodiments of this application, the flow guiding recess and the stator groove are arranged in the radial direction. The insulated paint overflowing from the stator groove may be guided to the flow guiding recess. Providing the flow guiding recess increases an area of the concave region on the end face of the stator and near the stator groove. The concave region not covered by the end plate can accommodate more insulated paint, to prevent the insulated paint from entering the cooling channel to block the cooling channel.

In an implementation, a width of the body portion in the radial direction of the motor is less than or equal to a width of the yoke portion in the radial direction of the motor. A relatively small width of the body portion helps reduce a weight of the motor and a size of the motor, to facilitate miniaturization of the motor.

In an implementation, the width of the body portion in the radial direction of the motor is greater than or equal to a width of the protrusion in the radial direction of the motor. A relatively large width of the body portion allows the through hole to be provided in the body portion, to reduce the risk that the insulated paint blocks the cooling hole in the adjacent silicon steel sheet. In addition, the relatively large width of the body portion leads to large strength of the entire body portion, so that the body portion plays a role of connecting to the plurality of protrusions.

In an implementation, the at least some cooling holes in the tooth portions of each of the silicon steel sheets are sequentially spaced apart in a circumferential direction of the motor. The some cooling holes in the yoke portion of each of the silicon steel sheets are sequentially spaced apart in the circumferential direction of the motor. A quantity of the at least some cooling holes is greater than or equal to a quantity of the some cooling holes. When the motor is working, a temperature of the tooth portions is higher than a temperature of the yoke portion. Providing more cooling holes in the tooth portions helps effectively cool the motor.

In an implementation, the at least some through holes in the plurality of protrusions are sequentially spaced apart in the circumferential direction of the motor. The some through holes in the body portion are sequentially spaced apart in the circumferential direction of the motor. A quantity of the at least some through holes is greater than or equal to a quantity of the some through holes. The protrusion is close to the stator groove. When being heated and overflowing from the stator groove, the insulated paint is more likely to enter the cooling hole of the tooth portion. In embodiments of this application, disposing more protrusions and providing more through holes in the end plate can more effectively reduce the risk that the cooling hole is blocked.

In an implementation, the end plate includes a plurality of body portions. The plurality of body portions are spaced apart in a circumferential direction of the motor. Each of the body portions is connected to at least one of the protrusions. A total length of the plurality of body portions in the circumferential direction of the motor is less than or equal to a length of the yoke portion in the circumferential direction of the motor. The end plate is divided into parts, so that the end plate can be selectively arranged in a region in which the cooling hole needs to be prevented from being blocked. This can not only reduce costs, but also reduce an overall weight of the motor.

In an implementation, the cooling holes are distributed in the yoke portion. The end plate and the yoke portion are stacked in the axial direction of the motor. The projection of the end plate in the axial direction of the motor is within a projection of the yoke portion in the axial direction of the motor. Disposing the end plate increases a height around the cooling hole. During drying of the insulated paint, the end plate acts as a barrier against the insulated paint overflowing from the stator groove, making it difficult for the insulated paint to flow to the through hole and the cooling hole, to reduce the risk that the cooling hole is blocked.

In an implementation, a width of the end plate in the radial direction of the motor is less than or equal to a width of the yoke portion in the radial direction of the motor. A small width of the end plate helps reduce a weight of the motor and a size of the motor, to facilitate miniaturization of the motor.

In an implementation, a distance between the end plate and an outer circumferential surface of the yoke portion in the radial direction of the motor is less than or equal to a distance between the end plate and the inner circumferential surface of the yoke portion in the radial direction of the motor. There is a large distance between the end plate and the inner circumferential surface of the yoke portion, and the end plate is disposed away from the stator groove, to increase an area of the concave region on the end face of the stator. In this way, a region between the end plate and the inner circumferential surface of the yoke portion can be used to guide the insulated paint, to effectively reduce the risk that the cooling hole is blocked.

In an implementation, the motor includes a plurality of end plates. The plurality of end plates are stacked in the axial direction of the motor and located at a same end of the plurality of silicon steel sheets. The through holes of the plurality of end plates communicate with each other. The plurality of end plates are stacked to increase the height of the stator in the axial direction in the region covered by the end plate. A boss structure formed by the plurality of end plates can act as a barrier against the insulated paint that overflows from the stator groove due to thermal expansion, so that the overflowing insulated paint flows to the concave region not covered by the end plate, to reduce a risk that the insulated paint blocks the cooling hole.

In an implementation, the motor includes two end plates. The two end plates are respectively located at two ends of the plurality of silicon steel sheets in the axial direction of the motor. The through holes of the two end plates respectively communicate with the adjacent cooling holes. End plates are disposed on both end faces of the stator in the axial direction, so that when the insulated paint overflows to any end face of the stator, the end plate can act as a barrier against the insulated paint, to reduce the risk that the insulated paint blocks the cooling hole.

According to a second aspect, this application provides a powertrain. The powertrain includes a reducer and the foregoing motor. The motor further includes a stator winding, a rotor, and a motor shaft. The end plate and the silicon steel sheets of the stator are sleeved on the rotor. The rotor is sleeved and fastened on the motor shaft. The stator winding is configured to be wound between the tooth portions of the silicon steel sheets. The stator winding is configured to receive an alternating current to drive the rotor to rotate, thereby driving the motor shaft to rotate. The reducer includes a reducer input shaft. The motor shaft is in transmission connection with the reducer input shaft and configured to transmit power to the reducer input shaft.

### BRIEF DESCRIPTION OF DRAWINGS

To describe technical solutions in embodiments of this application more clearly, the following describes the accompanying drawings used in embodiments of this application.
FIG. 1 is a diagram of an electric vehicle according to an embodiment of this application;
FIG. 2 is a diagram of a powertrain according to an embodiment of this application;
FIG. 3 is a diagram of a motor according to an embodiment of this application;
FIG. 4 is an exploded view of a stator according to an embodiment of this application;
FIG. 5 is a three-dimensional view of a stator according to an embodiment of this application;
FIG. 6 is a diagram of a silicon steel sheet according to an embodiment of this application;
FIG. 7 is a diagram of an end plate according to an embodiment of this application;
FIG. 8 is a diagram of a stator according to an embodiment of this application;
FIG. 9 is a diagram of a silicon steel sheet according to an embodiment of this application;
FIG. 10 is a diagram of an end plate according to an embodiment of this application;
FIG. 11 is a diagram of a stator according to an embodiment of this application;
FIG. 12 is a diagram of a stator according to an embodiment of this application;
FIG. 13 is a diagram of a silicon steel sheet according to an embodiment of this application;
FIG. 14 is a diagram of an end plate according to an embodiment of this application; and
FIG. 15 is a diagram of a stator according to an embodiment of this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

A motor provided in this application may be used in various fields such as aviation, national defense, industrial and agricultural production, and daily life. Specifically, the motor 10 may be used in an industrial drive apparatus, an automation device, a fan, a pump, a compressor, a machine tool, a robot, and a carrying means. The carrying means may include a road transportation means, an air transportation means, a water transportation means, an industrial device, an agricultural device, an entertainment device, or the like. For example, the water transportation means may be a hovercraft, a launch, a motorboat, a fishing boat, a cruise ship, a sailboat, a yacht, or the like. The air transportation means may be an airplane. The road transportation means may be a vehicle.

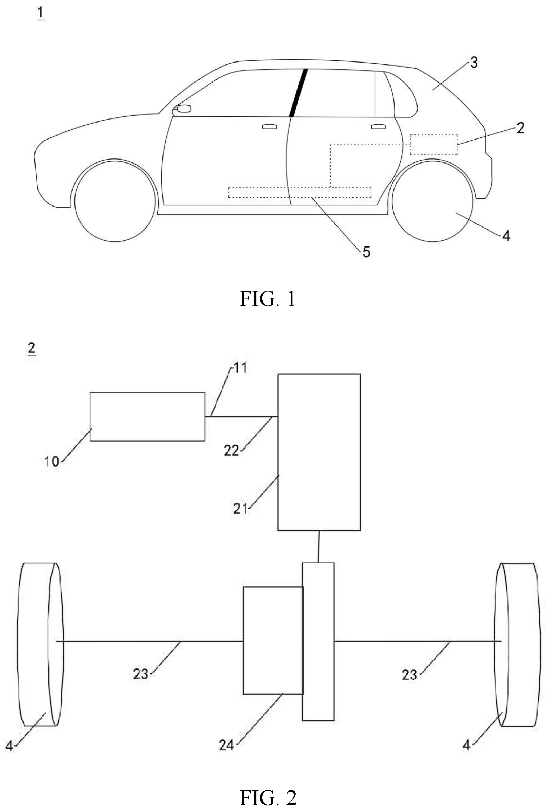

FIG. 1 is a diagram of an electric vehicle 1 according to an embodiment of this application. The electric vehicle 1 includes a vehicle body 3 and a powertrain 2. The powertrain 2 includes a motor 10 (with reference to FIG. 2). The powertrain 2 is mounted in the vehicle body 3. The powertrain 2 can drive a wheel 4 to rotate to provide power for the electric vehicle 1.

The electric vehicle 1 includes a two-wheeled, three-wheeled, or four-wheeled vehicle. The electric vehicle 1 may be one of a pure electric vehicle (Pure Electric Vehicle/Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), and a new energy vehicle (New Energy Vehicle). In an implementation, the electric vehicle 1 is a transportation vehicle. For example, the electric vehicle 1 is one of a commercial vehicle, a passenger vehicle, a motorcycle, a flight vehicle, and a train. In an implementation, the electric vehicle 1 is an industrial vehicle or an engineering vehicle. For example, the electric vehicle 1 is one of a forklift truck, a trailer, a tractor, an excavator, a bulldozer, and a crane. In an implementation, the vehicle may be an electric vehicle or a fuel vehicle. In an implementation, the electric vehicle 1 may alternatively be an agricultural device (such as a lawn mower or a harvester), an amusement device, a toy vehicle, or the like.

In an implementation, the electric vehicle 1 may include one or more powertrains 2.

FIG. 2 is a diagram of the powertrain 2 according to an embodiment of this application. The powertrain 2 includes a reducer 21 and the motor 10. The reducer 21 includes a reducer input shaft 22. The motor 10 includes a motor shaft 11. The motor shaft 11 is fastened to the reducer input shaft 22. The motor shaft 11 is configured to transmit power to the reducer input shaft 22. An axial direction A of the reducer input shaft 22 is parallel to an axial direction A of the motor 10. The reducer 21 can change a transmission ratio of the motor 10 to the wheel 4. The reducer 21 may include a single-speed, two-speed, or multi-speed reduction gear assembly. Rotation of the motor shaft 11 may drive the reducer input shaft 22 to rotate, so that power output by the motor 10 is transmitted to the reducer input shaft 22.

In an implementation, the powertrain 2 further includes a wheel drive half-shaft 23 and a differential 24 (as shown in FIG. 2). The wheel drive half-shaft 23 is fastened to the wheel 4. The reducer 21 receives, through the reducer input shaft 22, the power transmitted by the motor shaft 11, and transmits the power to the wheel drive half-shaft 23 through the differential 24, to drive the wheel 4 to rotate. The differential 24 can enable left and right (or front and rear) wheels to rotate at different rotational speeds.

In an implementation, the motor shaft 11 and the reducer input shaft 22 may be a same shaft.

In an implementation, the powertrain 2 may include one motor 10 or one reducer 21. For example, the powertrain 2 may be a three-in-one single-motor powertrain. In an implementation, the powertrain 2 may include a plurality of motors 10 or a plurality of reducers 21. For example, the powertrain 2 may be a distributed dual-motor powertrain.

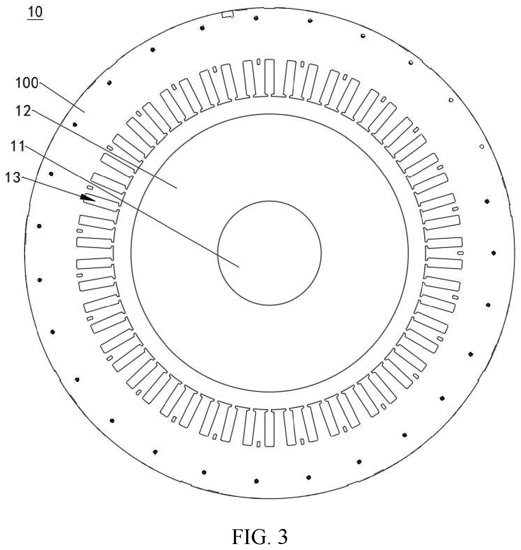

FIG. 3 is a diagram of the motor 10 according to an embodiment of this application. In an implementation, the motor 10 includes the motor shaft 11, a rotor 12, and a stator 100. The rotor 12 is sleeved and fastened on an outer surface of the motor shaft 11. The stator 100 is sleeved on the rotor 12 and spaced apart from an outer surface of the rotor 12. The stator 100 further includes a stator groove 13. The stator groove 13 penetrates the stator 100 in the axial direction A of the motor 10. The motor 10 includes a stator winding (not shown in the figure). The stator winding is mounted and fastened in the stator groove 13. A rotating magnetic field generated after an alternating current is applied to the stator winding interacts with a permanent magnet on the rotor 12. An electromagnetic field enables the rotor 12 to rotate, to drive the motor shaft 11 to rotate.

In an implementation, the electric vehicle 1 further includes a battery pack 5 (as shown in FIG. 1), and the powertrain 2 further includes a motor controller. The motor controller is connected to the battery pack and the stator winding. The motor controller is configured to receive a direct current output by the battery pack 5, convert the direct current output by the battery pack 5 into an alternating current, and transmit the alternating current to the stator winding, to drive the motor shaft 11 of the motor 10 to rotate.

The motor 10 generates heat during working. Consequently, a temperature of the motor 10 increases. A high temperature affects performance of the motor 10 and reduces working efficiency of the powertrain 2. If the heat is not dissipated for the motor 10 in time, the motor 10 may be damaged due to an excessively high temperature. To implement heat dissipation and cooling of the motor 10, the stator 100 is usually provided with a cooling channel. A cooling medium circulates in the cooling channel. When the cooling medium flows in the cooling channel, heat generated by the stator 100 can be taken away. The cooling medium may be cooling oil or another cooling medium having an insulation property.

To improve the performance of the motor 10, the stator winding and the stator are usually dipped in paint. Insulated paint penetrates into the stator winding and a gap between the stator winding and the stator groove 13, to improve insulation, thermal conductivity, electrical performance, and the like of the stator 100 and the stator winding. However, in a drying process of the insulated paint, there is a risk that the insulated paint in the stator groove 13 overflows to an end of the stator 100 and flows into the cooling channel to block the cooling channel. The motor 10 provided in this application includes an end plate (not shown in FIG. 3). The end plate can prevent the overflowing insulated paint from entering the cooling channel. The cooling channel is kept unblocked, to effectively cool the stator 100, thereby improving working efficiency of the motor 10 and prolonging a service life of the motor 10.

The following describes in detail the stator 100 of the motor 10 in this application.

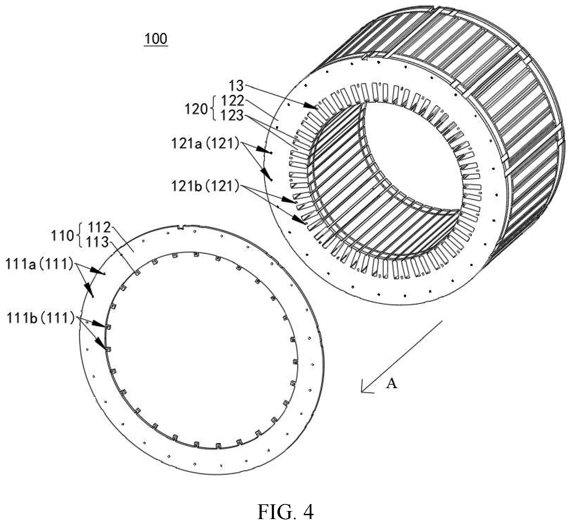

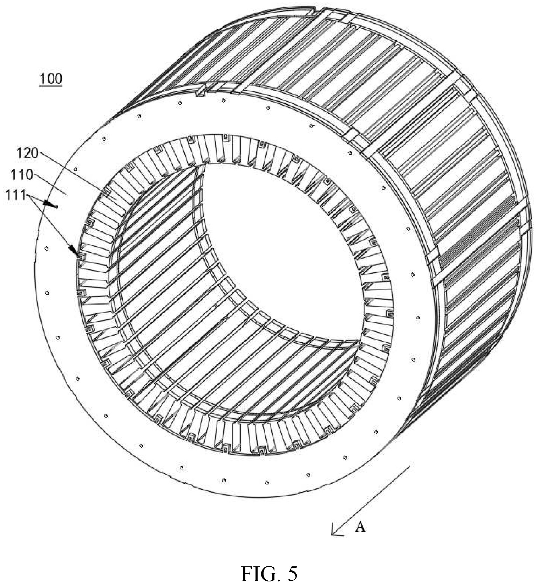

FIG. 4 is an exploded view of the stator 100 according to an embodiment of this application. FIG. 5 is a three-dimensional view of the stator 100 according to an embodiment of this application. This application provides the motor 10. The stator 100 of the motor 10 includes an end plate 110 and a plurality of silicon steel sheets 120. The end plate 110 and the plurality of silicon steel sheets 120 are stacked in the axial direction A of the motor 10. Each silicon steel sheet 120 includes a cooling hole 121. The cooling hole 121 penetrates the silicon steel sheet 120 in the axial direction A of the motor 10. The cooling holes 121 of the plurality of silicon steel sheets 120 communicate with each other. The end plate 110 includes a through hole 111. The through hole 111 penetrates the end plate 110 in the axial direction A of the motor 10. The through hole 111 communicates with the cooling holes 121. A projection of the end plate 110 in the axial direction A of the motor 10 is within a projection of the silicon steel sheet 120 in the axial direction A of the motor 10. A cross-sectional area of the end plate 110 is less than a cross-sectional area of the silicon steel sheets 120. A cross section of the end plate 110 and cross sections of the silicon steel sheets 120 are all perpendicular to the axial direction A of the motor 10.

The plurality of silicon steel sheets 120 are all sleeved on an outer circumferential side of the rotor 12 and spaced apart from an outer circumferential surface of the rotor 12. The plurality of silicon steel sheets 120 are stacked in the axial direction A. This stacked assembly design can reduce an eddy current loss of the stator 100. The cooling holes 121 of adjacent silicon steel sheets 120 communicate with each other. A plurality of cooling holes 121 communicate with each other to form a cooling channel. The cooling channel is used to cool the stator 100.

In an implementation, cooling holes 121 at a same position of all silicon steel sheets 120 overlap. In other words, projections of a plurality of cooling holes 121 in the axial direction A coincide. The cooling channel is linear. In an implementation, at least some cooling holes 121 are staggered at a specific angle. In other words, the at least some cooling holes 121 do not completely overlap. The formed cooling channel has a specific bending degree.

In an implementation, each silicon steel sheet 120 includes one cooling hole 121. The cooling holes 121 of all silicon steel sheets 120 communicate with each other to form one cooling channel. In an implementation, each silicon steel sheet 120 includes a plurality of cooling holes 121. Corresponding cooling holes 121 communicate with each other to form a plurality of cooling channels.

The end plate 110 is sleeved on the outer circumferential side of the rotor 12 and spaced apart from the outer circumferential surface of the rotor 12. The end plate 110 is located at an end of the plurality of silicon steel sheets 120 in the axial direction A. The end plate 110 and the plurality of silicon steel sheets 120 are stacked in the axial direction A to form the stator 100. The end plate 110 is adjacent to one of the first and last silicon steel sheets 120 in the plurality of silicon steel sheets 120 in the axial direction A. The end plate 110 is located at an end of the stator 100 in the axial direction A. The end plate 110 may be fastened to the adjacent silicon steel sheet 120 through welding, adhesive bonding, riveting, or another process. A material of the end plate 110 may be plastic or silicon steel. For example, the end plate 110 may be obtained through processing based on the silicon steel sheets 120.

In embodiments of this application, because the through hole 111 in the end plate 110 communicates with the cooling hole 121 in the adjacent silicon steel sheet 120, in a region covered by the end plate 110, the cooling medium may enter the cooling channel from the through hole 111, or the cooling medium in the cooling channel may flow out of the cooling channel from the through hole 111. The cooling medium can normally enter and exit the cooling channel to cool the stator 100.

In addition, in the axial direction A of the motor 10, because the end plate 110 does not completely cover the silicon steel sheets 120, a height of the stator 100 in the region covered by the end plate 110 is a total height of the end plate 110 and the plurality of silicon steel sheets 120, and a height of the stator 100 in a region not covered by the end plate 110 is a total height of the plurality of silicon steel sheets 120, so that an end face that is of the stator 100 and that is close to the end plate 110 in the axial direction A is an uneven surface. The region not covered by the end plate 110 is a concave region. When the stator 100 and the stator winding are dipped in paint or the motor 10 is working, a boss structure formed by the end plate 110 can act as a barrier against the insulated paint that overflows from the stator groove 13 due to thermal expansion, so that the overflowing insulated paint flows to the concave region not covered by the end plate 110, to reduce a risk that the insulated paint blocks the cooling hole 121. The cooling channel of the motor 10 provided in this application is not easily blocked by the insulated paint. The cooling channel is kept unblocked, to effectively cool the stator 100, so that the motor 10 has higher working efficiency and a longer service life.

In an implementation, the end plate 110 includes one or more through holes 111. Each silicon steel sheet 120 includes one or more cooling holes 121. A quantity of through holes 111 is less than or equal to a quantity of cooling holes 121 in each silicon steel sheet 120.

In an implementation, each through hole 111 communicates with one cooling hole 121 in the adjacent silicon steel sheet 120. For example, the end plate 110 includes six through holes 111. The silicon steel sheet 120 adjacent to the end plate 110 includes six or more cooling holes 121. The six through holes 111 respectively communicate with any six cooling holes 121 in the adjacent silicon steel sheet 120.

In an implementation, one through hole 111 may communicate with two or more cooling holes 121 in the adjacent silicon steel sheet 120. For example, a through hole 111a and a through hole 111b in FIG. 4 may communicate with each other to form a large through hole 111. The through hole 111 may communicate with a cooling hole 121a and a cooling hole 121b.

In a possible implementation, a projection of the through hole 111 in the axial direction A of the motor 10 at least partially overlaps a projection of the cooling hole 121 of the adjacent silicon steel sheet 120 in the axial direction A of the motor 10. The adjacent silicon steel sheet 120 is the silicon steel sheet 120 closest to the end plate 110 in the axial direction A. In the axial direction A, the projection of the through hole 111 covers at least a part of the cooling hole 121. For example, the projection of the through hole 111 may be within the projection of the cooling hole 121, or the projection of the through hole 111 covers the cooling hole 121. When the motor 10 includes a plurality of through holes 111 and a plurality of cooling holes 121, a projection of each through hole 111 at least partially overlaps a projection of its corresponding communicating cooling hole 121.

In embodiments of this application, because the projection of the through hole 111 in the axial direction A at least partially overlaps the projection of the cooling hole 121 of the adjacent silicon steel sheet 120 in the axial direction A, the through hole 111 communicates with the cooling hole 121 in an overlapping region of the projection of the through hole 111 and the projection of the cooling hole 121. A short communication path between the through hole 111 and the cooling hole 121 of the adjacent silicon steel sheet 120 leads to a short path for the cooling medium to enter the cooling channel through the through hole 111 of the end plate 110 and the cooling hole 121 of the adjacent silicon steel sheet 120, or a short path for the cooling medium in the cooling channel to be discharged out of the cooling channel through the cooling hole 121 of the adjacent silicon steel sheet 120 and the through hole 111 of the end plate 110, so that the cooling medium can quickly cool the stator 100.

In an implementation, the projection of the through hole 111 may alternatively not overlap the projection of the cooling hole 121 of the adjacent silicon steel sheet 120. In this case, an end face that is of the end plate 110 and that is close to the silicon steel sheet 120 may be provided with a groove. The groove communicates with the through hole 111 and the cooling hole 121.

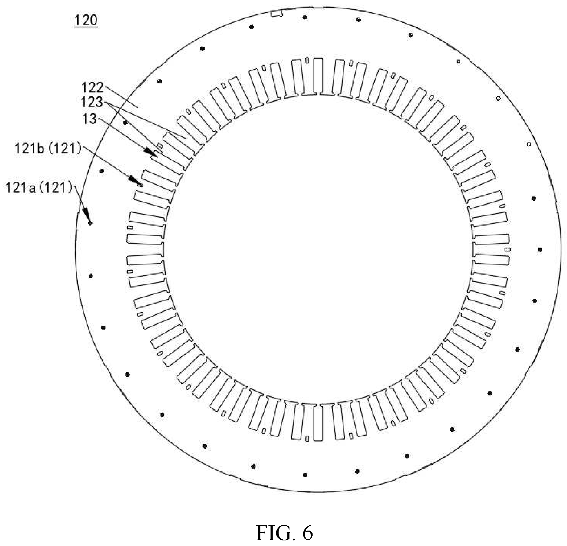

FIG. 6 is a diagram of the silicon steel sheet 120 according to an embodiment of this application. In a possible implementation, each silicon steel sheet 120 includes a yoke portion 122 and a plurality of tooth portions 123 that are spaced apart. An end of each tooth portion 123 in a radial direction of the motor 10 is connected to an inner circumferential surface of the yoke portion 122. At least one of the yoke portion 122 and the plurality of tooth portions 123 includes the cooling hole 121. The yoke portion 122 is annular. The plurality of tooth portions 123 are spaced apart in a circumferential direction of the motor 10. The plurality of tooth portions 123 are located on an inner side of the yoke portion 122. The other end of each tooth portion 123 faces the rotor 12 of the motor 10. Each tooth portion 123 protrudes from the inner circumferential surface of the yoke portion 122 in the radial direction toward a direction away from the yoke portion 122. There is a gap between two adjacent tooth portions 123.

The yoke portions 122 of the plurality of silicon steel sheets 120 are sequentially stacked in the axial direction A of the motor 10 to form a yoke portion 122 of the stator 100. The tooth portions 123 of the plurality of silicon steel sheets 120 are sequentially stacked in the axial direction A of the motor 10 to form a plurality of columns of tooth portions 123. In an axial direction A of the stator 100, the tooth portions 123 of all silicon steel sheets 120 are in a one-to-one correspondence and overlap. In other words, projections of a plurality of tooth portions 123 in the axial direction A coincide. Gaps between two adjacent tooth portions 123 communicate with each other in the axial direction A to form the stator groove 13. In other words, the stator groove 13 is formed between two adjacent columns of tooth portions 123. The stator groove 13 penetrates the stator 100 in the axial direction A. The stator winding is mounted in the stator groove 13.

For ease of description, a cooling hole 121 in the yoke portion 122 is defined as a cooling hole 121a, and a cooling hole 121 in the tooth portion 123 is defined as a cooling hole 121b. In an implementation, all cooling holes 121 in each silicon steel sheet 120 are distributed in the yoke portion 122. The cooling hole 121a penetrates the yoke portion 122 in the axial direction A.

In an implementation, all cooling holes 121 in each silicon steel sheet 120 are distributed in the tooth portions 123. The cooling hole 121b penetrates the tooth portion 123 in the axial direction A. In an implementation, one cooling hole 121 is distributed in each tooth portion 123. In an implementation, each tooth portion 123 may alternatively include two or more cooling holes 121. In an implementation, in each silicon steel sheet 120, some tooth portions 123 are provided with the cooling holes 121, and the other tooth portions 123 are not provided with the cooling holes 121.

In an implementation, the cooling holes 121 are distributed in both the tooth portions 123 and the yoke portion 122 of each silicon steel sheet 120. In each silicon steel sheet 120, a quantity of cooling holes 121b distributed in the tooth portions 123 may be the same as or different from a quantity of cooling holes 121a distributed in the yoke portion 122.

In embodiments of this application, the cooling holes 121 are distributed in at least one of the yoke portion 122 and the tooth portions 123. If the cooling holes 121 are distributed in the yoke portion 122, the yoke portion 122 has large space for providing the cooling holes 121a, and the end plate 110 is easily fastened to the yoke portion 122 of the adjacent silicon steel sheet 120, so that the end plate 110 can better reduce a risk that the insulated paint blocks the cooling holes 121a. If the cooling holes 121 are distributed in the tooth portions 123, the tooth portions 123 generate a large amount of heat when the motor 10 is working, and providing the cooling holes 121b in the tooth portions 123 can effectively reduce a temperature of the stator 100. In addition, the cooling holes 121b in the tooth portions 123 are close to the stator groove 13, and the insulated paint overflowing from the stator groove 13 is more likely to block the cooling holes 121b. In embodiments of this application, disposing the end plate 110 reduces a risk that the insulated paint blocks the cooling holes 121b.

In an implementation, the tooth portions 123 and the yoke portion 122 of each silicon steel sheet 120 are of an integral structure. In other words, the tooth portions 123 and the yoke portion 122 of each silicon steel sheet 120 are integrally formed, to improve structural strength of the silicon steel sheet 120 and reduce difficulty in a production process of the silicon steel sheet 120.

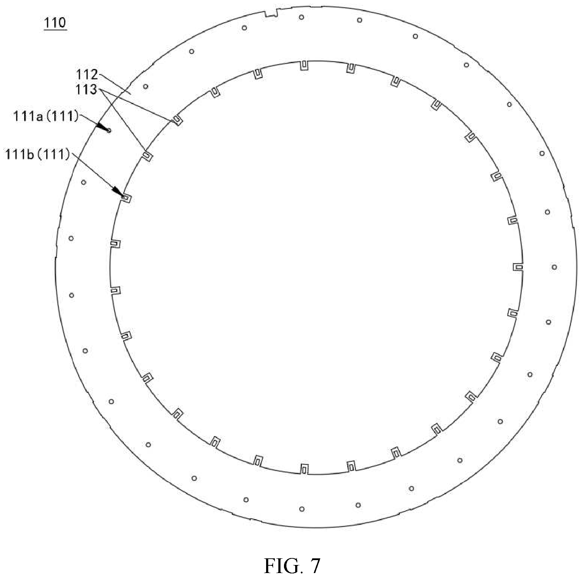

FIG. 7 is a diagram of the end plate 110 according to an embodiment of this application. In a possible implementation, there are a plurality of cooling holes 121. In each silicon steel sheet 120, at least some cooling holes 121 are distributed in at least some tooth portions 123. The end plate 110 includes a body portion 112 and a plurality of protrusions 113 that are spaced apart. An end of each protrusion 113 in the radial direction of the motor 10 is connected to an inner circumferential surface of the body portion 112. The protrusion 113 and the tooth portion 123 are stacked in the axial direction A of the motor 10. The body portion 112 and the yoke portion 122 are stacked in the axial direction A of the motor 10. There are a plurality of through holes 111. At least some through holes 111 are distributed in the plurality of protrusions 113. The at least some through holes 111 respectively communicate with the at least some cooling holes 121 of the adjacent silicon steel sheet 120.

Some or all tooth portions 123 of each silicon steel sheet 120 are provided with the cooling holes 121. In an implementation, each tooth portion 123 is provided with one cooling hole 121. In an implementation, the tooth portion 123 with the cooling hole 121 and the tooth portion 123 without the cooling hole 121 are alternately arranged in the circumferential direction.

The plurality of protrusions 113 are spaced apart in the circumferential direction of the motor 10. The plurality of protrusions 113 are located on an inner side of the body portion 112. The other end of each protrusion 113 faces the rotor 12 of the motor 10. Each protrusion 113 protrudes from the inner circumferential surface of the body portion 112 in the radial direction toward a direction away from the body portion 112. There is a gap between two adjacent protrusions 113. In the axial direction A, a projection of the protrusion 113 is within a projection of the tooth portion 123, and a projection of the body portion 112 is within a projection of the yoke portion 122.

Each protrusion 113 is provided with at least one through hole 111. For ease of description, the through hole 111 distributed in the protrusion 113 is defined as a through hole 111b. The through hole 111b communicates with the corresponding cooling hole 121b in the adjacent silicon steel sheet 120. In an implementation, a quantity of through holes 111b, a quantity of cooling holes 121b, a quantity of tooth portions 123 of each silicon steel sheet 120, and a quantity of protrusions 113 of the end plate 110 are equal. Each protrusion 113 is provided with one through hole 111b. Each tooth portion 123 of each silicon steel sheet 120 is provided with one cooling hole 121b.

In an implementation, a quantity of through holes 111b, a quantity of cooling holes 121b, and a quantity of protrusions 113 of the end plate 110 are equal, and a quantity of tooth portions 123 of each silicon steel sheet 120 is greater than the quantity of cooling holes 121b.

In embodiments of this application, because the tooth portions 123 generate a large amount of heat and the cooling holes 121b are close to the stator groove 13, disposing the end plate 110 increases a height around the cooling holes 121b and reduces the risk that the insulated paint blocks the cooling holes 121b, so that a cooling channel formed by the cooling holes 121b can more effectively cool the stator 100.

In an implementation, the body portion 112 and the plurality of protrusions 113 are of an integral structure. In other words, the body portion 112 and the plurality of protrusions 113 are integrally formed, to improve structural strength of the end plate 110 and reduce difficulty in a production process of the end plate 110.

With reference to FIG. 5, FIG. 6, and FIG. 7, in a possible implementation, in each silicon steel sheet 120, some cooling holes 121 are distributed in the yoke portion 122. The other cooling holes 121 are distributed in the tooth portions 123. Some through holes 111 are distributed in the body portion 112. The other through holes 111 are distributed in the protrusions 113. The some through holes 111 respectively communicate with the some cooling holes 121 of the adjacent silicon steel sheet 120. In other words, the through holes 111a distributed in the body portion 112 communicate with the cooling holes 121a distributed in the yoke portion 122 of the adjacent silicon steel sheet 120. In embodiments of this application, disposing the end plate 110 not only reduces a risk that the cooling hole 121b in the tooth portion 123 is blocked, but also reduces a risk that the cooling hole 121a in the yoke portion 122 is blocked.

In a possible implementation, the at least some cooling holes 121 in the tooth portions 123 of each silicon steel sheet 120 are sequentially spaced apart in the circumferential direction of the motor 10 (as shown in FIG. 6). The some cooling holes 121 in the yoke portion 122 of each silicon steel sheet 120 are sequentially spaced apart in the circumferential direction of the motor 10. A quantity of the at least some cooling holes 121 is greater than or equal to a quantity of the some cooling holes 121. The at least some cooling holes 121 are the cooling holes 121b distributed in the tooth portions 123. The some cooling holes 121 are the cooling holes 121a distributed in the yoke portion 122. A plurality of cooling holes 121b are spaced apart in the circumferential direction. A plurality of cooling holes 121a are also spaced apart in the circumferential direction. In embodiments of this application, when the motor 10 is working, a temperature of the tooth portions 123 is higher than a temperature of the yoke portion 122. Providing more cooling holes 121b in the tooth portions 123 helps effectively cool the motor 10.

In an implementation, the cooling hole 121b in the tooth portion 123 and the cooling hole 121a in the yoke portion 122 are arranged in the radial direction of the motor 10 (as shown in FIG. 6). In an implementation, the cooling hole 121b in the tooth portion 123 and the cooling hole 121a in the yoke portion 122 may alternatively be staggered in the radial direction of the motor 10.

In a possible implementation, the at least some through holes 111b in the plurality of protrusions 113 are sequentially spaced apart in the circumferential direction of the motor 10 (as shown in FIG. 7). The some through holes 111b in the body portion 112 are sequentially spaced apart in the circumferential direction of the motor 10. A quantity of the at least some through holes 111b is greater than or equal to a quantity of the some through holes 111a. The end plate 110 includes a plurality of through holes 111. At least some through holes 111b are distributed in the protrusions 113. Some through holes 111a are distributed in the body portion 112. The protrusion 113 is close to the stator groove 13. When being heated and overflowing from the stator groove 13, the insulated paint is more likely to enter the cooling hole 121b of the tooth portion 123. In embodiments of this application, disposing more protrusions 113 and providing more through holes 111b in the end plate 110 can more effectively reduce the risk that the cooling hole 121 is blocked.

In an implementation, the through hole 111b in the protrusion 113 and the through hole 111a in the body portion 112 are arranged in the radial direction of the motor 10 (as shown in FIG. 7). In an implementation, the through hole 111b in the protrusion 113 and the through hole 111a in the body portion 112 are staggered in the radial direction of the motor 10.

With reference to FIG. 5, FIG. 6, and FIG. 7, in a possible implementation, in the at least some through holes 111, a distance between the through hole 111 and one end of the tooth portion 123 in the radial direction of the motor 10 is less than a distance between the through hole 111 and the other end of the tooth portion 123 in the radial direction of the motor 10. The at least some through holes 111 are the through holes 111b distributed in the protrusions 113. The end of the tooth portion 123 is opposite to the other end of the tooth portion 123 in the radial direction. The end of the tooth portion 123 is the end that is of the tooth portion 123 and that is connected to the yoke portion 122 in the radial direction. The other end of the tooth portion 123 is the end that is of the tooth portion 123 and that faces the rotor 12 in the radial direction.

In embodiments of this application, in the tooth portion 123 with the cooling hole 121b, a distance between the cooling hole 121b and the end of the tooth portion 123 is less than a distance between the cooling hole 121b and the other end of the tooth portion 123. A short distance between the cooling hole 121b and the yoke portion 122 can reduce impact of providing the cooling hole 121b on a magnetic circuit of the stator 100 while effectively cooling the stator 100. In addition, the distance between the through hole 111b and the end of the tooth portion 123 is less than the distance between the through hole 111 and the other end of the tooth portion 123. The through hole 111b and the cooling hole 121b may be stacked, to reduce a communication distance between the through hole 111b and the cooling hole 121b, thereby facilitating rapid cooling of the stator 100.

With reference to FIG. 5, FIG. 6, and FIG. 7, in a possible implementation, a length of the protrusion 113 in the circumferential direction of the motor 10 is less than a length of the tooth portion 123 in the circumferential direction of the motor 10. The cooling hole 121b is located at a middle part or an approximate middle part of the tooth portion 123 in the circumferential direction. The projection of the protrusion 113 in the axial direction A covers the middle part or the approximate middle part of the tooth portion 123 in the circumferential direction. The protrusion 113 is spaced apart from at least one of two sides of the tooth portion 123 that are opposite to each other in the circumferential direction. In embodiments of this application, when the insulated paint overflows from the stator groove 13 to the end face of the stator 100 in the axial direction after thermal expansion, due to a small length of the protrusion 113 in the circumferential direction, the overflowing insulated paint is easily guided to a low-lying region not covered by the protrusion 113, for example, between an edge of the protrusion 113 in the circumferential direction and an edge of the tooth portion 123 in the circumferential direction, to reduce the risk that the cooling hole 121b is blocked.

In an implementation, in the circumferential direction, the protrusion 113 is spaced apart from the two sides of the tooth portion 123 that are opposite to each other in the circumferential direction. Disposing the protrusion 113 increases the height around the cooling holes 121b in the axial direction A. The protrusion 113 does not completely cover the tooth portion 123, so that the insulated paint is guided to a region that is of the tooth portion 123 and that is not covered by the protrusion 113, to prevent the insulated paint from entering the cooling channel formed by the cooling holes 121b and blocking the cooling channel.

With reference to FIG. 5, FIG. 6, and FIG. 7, in a possible implementation, a width of the protrusion 113 in the radial direction of the motor 10 is less than a width of the tooth portion 123 in the radial direction of the motor 10. The other end that is of the protrusion 113 and that is away from the body portion 112 in the radial direction is spaced apart from the other end that is of the tooth portion 123 and that is away from the yoke portion 122 in the radial direction. The insulated paint overflowing from the stator groove 13 can be guided to a region between the other end of the protrusion 113 and the other end of the tooth portion 123, to reduce the risk that the cooling hole 121b is blocked.

With reference to FIG. 5, FIG. 6, and FIG. 7, in a possible implementation, the yoke portion 122 includes the inner circumferential surface and an outer circumferential surface that are opposite to each other in the radial direction of the motor 10. In the some through holes 111, a distance between the through hole 111a and the inner circumferential surface in the radial direction of the motor 10 is greater than a distance between the through hole 111a and the outer circumferential surface in the radial direction of the motor 10. The inner circumferential surface of the yoke portion 122 is used to connect to the tooth portion 123. The some through holes 111 are the through holes 111a distributed in the body portion 112. In embodiments of this application, a distance between the cooling hole 121a distributed in the yoke portion 122 and the inner circumferential surface is greater than a distance between the cooling hole 121a and the outer circumferential surface. Because the tooth portion 123 is provided with the cooling hole 121b, providing the cooling hole 121a in the yoke portion 122 away from the tooth portion 123 facilitates rapid cooling of the entire stator 100. The through hole 111a is close to the outer circumferential surface of the yoke portion 122. The through hole 111a and the cooling hole 121a may be stacked, to reduce a communication distance between the through hole 111a and the cooling hole 121a, thereby facilitating rapid cooling of the stator 100.

With reference to FIG. 5, FIG. 6, and FIG. 7, in a possible implementation, a width of the body portion 112 in the radial direction of the motor 10 is less than or equal to a width of the yoke portion 122 in the radial direction of the motor 10. The body portion 112 may be annular. The width of the body portion 112 is an annular width. Alternatively, the body portion 112 may be irregularly annular. For example, the body portion 112 may be provided with a flow guiding recess 114. In this case, the width of the body portion 112 is a maximum width of the body portion 112. In embodiments of this application, a relatively small width of the body portion 112 helps reduce a weight of the motor 10 and a size of the motor 10, to facilitate miniaturization of the motor 10.

With reference to FIG. 5, FIG. 6, and FIG. 7, in a possible implementation, the width of the body portion 112 in the radial direction of the motor 10 is greater than or equal to a width of the protrusion 113 in the radial direction of the motor 10. A relatively large width of the body portion 112 allows the through hole 111a to be provided in the body portion 112, to reduce the risk that the insulated paint blocks the cooling hole 121a in the adjacent silicon steel sheet. In addition, the relatively large width of the body portion 112 leads to large strength of the entire body portion 112, so that the body portion 112 plays a role of connecting to the plurality of protrusions 113.

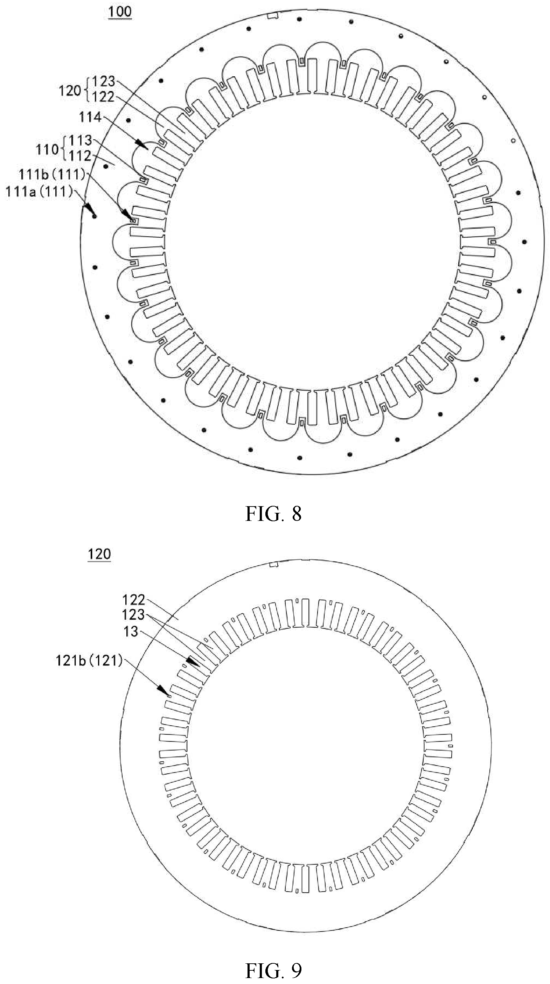

FIG. 8 is a diagram of the stator 100 according to an embodiment of this application. In a possible implementation, the body portion 112 further includes a flow guiding recess 114. The flow guiding recess 114 is recessed from the inner circumferential surface of the body portion 112 to an outer circumferential surface of the body portion 112. At least a part of a projection of the flow guiding recess 114 in the radial direction of the motor 10 is between projections of two adjacent tooth portions 123 in the circumferential direction of the motor 10 in the radial direction of the motor 10. In the circumferential direction, the flow guiding recess 114 is located between two adjacent protrusions 113. One (as shown in FIG. 8) or more flow guiding recesses 114 may be included between two adjacent protrusions 113.

In embodiments of this application, the flow guiding recess 114 and the stator groove 13 are arranged in the radial direction. The insulated paint overflowing from the stator groove 13 may be guided to the flow guiding recess 114. Providing the flow guiding recess 114 increases an area of the concave region on the end face of the stator 100 and near the stator groove 13. The concave region not covered by the end plate 110 can accommodate more insulated paint, to prevent the insulated paint from entering the cooling channel to block the cooling channel.

In an implementation, a length of the flow guiding recess 114 in the circumferential direction is greater than or equal to a distance between two adjacent tooth portions 123 and less than or equal to a distance between two adjacent protrusions 113. In an implementation, a width of the flow guiding recess 114 in the radial direction is greater than or equal to a distance between the cooling hole 121a and the end of the tooth portion 123, or a width of the flow guiding recess 114 in the radial direction is greater than or equal to a distance between the through hole 111 and the end of the tooth portion 123.

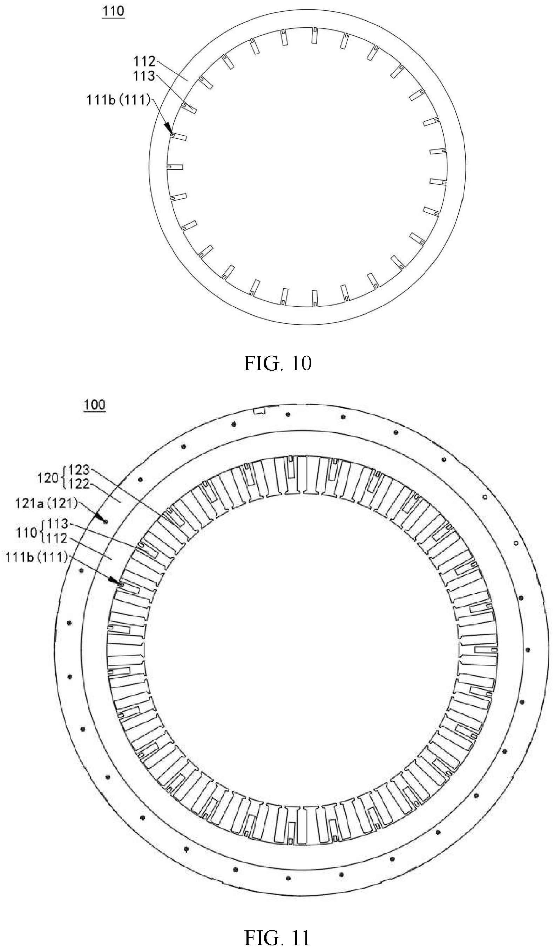

FIG. 9 is a diagram of the silicon steel sheet 120 according to an embodiment of this application. FIG. 10 is a diagram of the end plate 110 according to an embodiment of this application. In an implementation, all cooling holes 121 in each silicon steel sheet 120 are distributed in the tooth portions 123, and no cooling hole 121 is provided in the yoke portion 122 (as shown in FIG. 9). Similarly, all through holes 111 in the end plate 110 are distributed in the protrusions 113 (as shown in FIG. 10), and no through hole 111 is provided in the body portion 112. In this case, the body portion 112 is configured to connect to the plurality of protrusions 113, to help mount and fasten the plurality of protrusions 113. In embodiments of this application, disposing the end plate 110 reduces the risk that the cooling hole 121b in the tooth portion 123 is blocked. In an implementation, the end plate 110 may alternatively not be provided with the body portion 112.

FIG. 11 is a diagram of the stator 100 according to an embodiment of this application. In an implementation, in each silicon steel sheet 120, some cooling holes 121 are distributed in the tooth portions 123, and the other cooling holes 121 are distributed in the yoke portion 122 (with reference to FIG. 6). All through holes 111 in the end plate 110 are distributed in the protrusions 113 (with reference to FIG. 10), and no through hole 111 is provided in the body portion 112. In this case, the body portion 112 is configured to connect to the plurality of protrusions 113, to help mount and fasten the plurality of protrusions 113. In the axial direction A, the projection of the end plate 110 does not overlap that of the cooling hole 121a in the yoke portion 122. In embodiments of this application, disposing the end plate 110 reduces the risk that the cooling hole 121b in the tooth portion 123 is blocked.

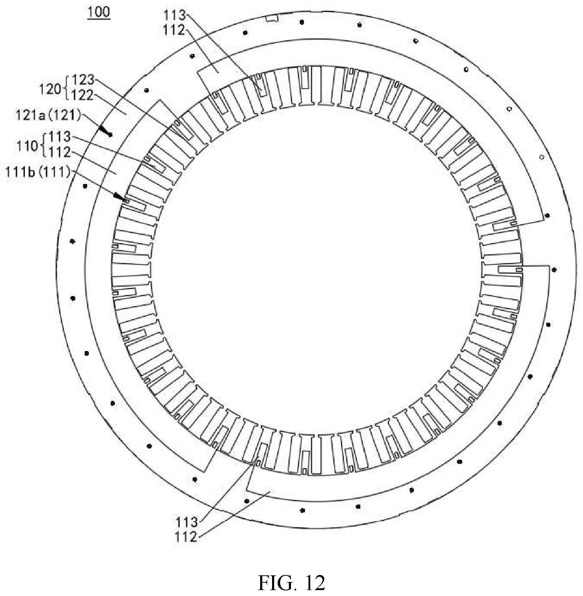

FIG. 12 is a diagram of the stator 100 according to an embodiment of this application. In a possible implementation, the end plate 110 includes a plurality of body portions 112. The plurality of body portions 112 are spaced apart in the circumferential direction of the motor 10. Each body portion 112 is connected to at least one protrusion 113. A total length of the plurality of body portions 112 in the circumferential direction of the motor 10 is less than or equal to a length of the yoke portion 122 in the circumferential direction of the motor 10. The end plate 110 is divided into a plurality of parts. Each part includes a body portion 112 and at least one protrusion 113. In the implementation shown in FIG. 12, the end plate 110 is divided into three parts. The end plate 110 includes three body portions 112. Nine protrusions 113 are connected to an inner circumferential side of each body portion 112. In an implementation, in the plurality of body portions 112, quantities of protrusions 113 connected to the body portions 112 may alternatively be different.

In embodiments of this application, the end plate 110 is divided into parts, so that the end plate 110 can be selectively arranged in a region in which the cooling hole needs to be prevented from being blocked. This can not only reduce costs, but also reduce an overall weight of the motor 10.

In an implementation, the end plate 110 includes a plurality of body portions 112. At least one of the body portions 112 is connected to at least one protrusion 113. The protrusion 113 is provided with the through hole 111b for communicating with the cooling hole 121b. The other body portions 112 are not connected to the protrusion 113. The other body portions 112 are provided with the through hole 111a for communicating with the cooling hole 121a.

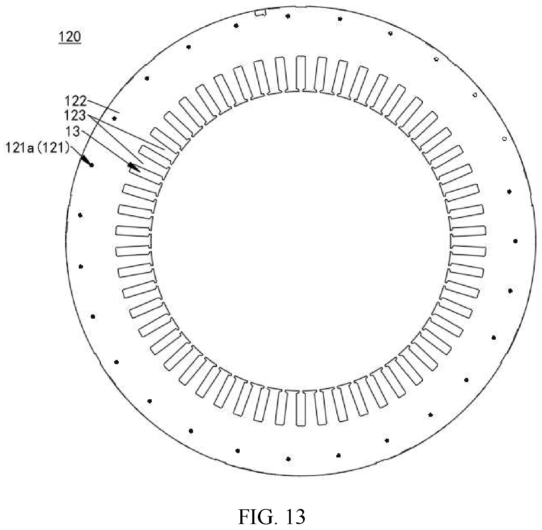

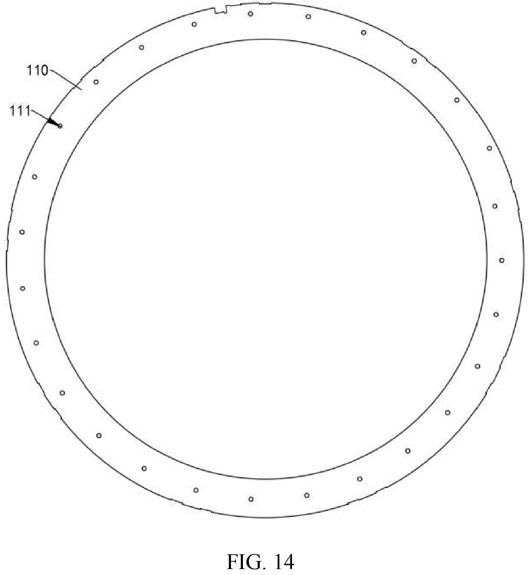

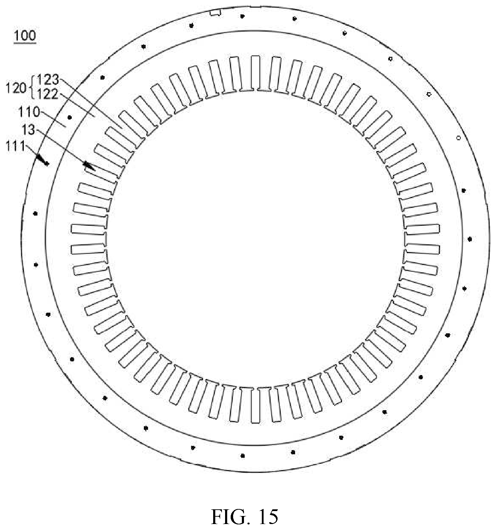

FIG. 13 is a diagram of the silicon steel sheet 120 according to an embodiment of this application. FIG. 14 is a diagram of the end plate 110 according to an embodiment of this application. FIG. 15 is a diagram of the stator 100 according to an embodiment of this application. In a possible implementation, the cooling holes 121 are distributed in the yoke portion 122. The end plate 110 and the yoke portion 122 are stacked in the axial direction A of the motor 10. The projection of the end plate 110 in the axial direction A of the motor 10 is within a projection of the yoke portion 122 in the axial direction A of the motor 10. The end plate 110 is annular or approximately annular. Disposing the end plate 110 increases a height around the cooling hole 121. During drying of the insulated paint, the end plate 110 acts as a barrier against the insulated paint overflowing from the stator groove 13, making it difficult for the insulated paint to flow to the through hole 111 and the cooling hole 121, to reduce the risk that the cooling hole 121 is blocked.

In an implementation, in the radial direction of the motor 10, a width of the end plate 110 is less than or equal to a width of the yoke portion 122. In embodiments of this application, a small width of the end plate 110 helps reduce a weight of the motor 10 and a size of the motor 10, to facilitate miniaturization of the motor 10.

In an implementation, in the radial direction of the motor 10, a distance between the end plate 110 and an outer circumferential surface of the yoke portion 122 is less than or equal to a distance between the end plate 110 and the inner circumferential surface of the yoke portion 122 (as shown in FIG. 15). In embodiments of this application, there is a large distance between the end plate 110 and the inner circumferential surface of the yoke portion 122, and the end plate 110 is disposed away from the stator groove 13, to increase an area of the concave region on the end face of the stator 100. In this way, a region between the end plate 110 and the inner circumferential surface of the yoke portion 122 can be used to guide the insulated paint, to effectively reduce the risk that the cooling hole 121 is blocked.

For other features of the end plate 110 in embodiments of this application, refer to the foregoing features of the body portion 112 provided with the through hole 111. Details are not described herein again.

In a possible implementation, the motor 10 includes a plurality of end plates 110. The plurality of end plates 110 are stacked in the axial direction A of the motor 10 and located at a same end of the plurality of silicon steel sheets 120. The through holes 111 of the plurality of end plates 110 communicate with each other. The plurality of end plates 110 are stacked to increase the height of the stator 100 in the axial direction A in the region covered by the end plate 110. A boss structure formed by the plurality of end plates 110 can act as a barrier against the insulated paint that overflows from the stator groove 13 due to thermal expansion, so that the overflowing insulated paint flows to the concave region not covered by the end plate 110, to reduce a risk that the insulated paint blocks the cooling hole 121. The cooling channel of the motor 10 provided in this application is not easily blocked by the insulated paint. The cooling channel is kept unblocked, to effectively cool the stator 100, so that the motor 10 has higher working efficiency and a longer service life.

In a possible implementation, the motor 10 includes two end plates 110. The two end plates 110 are respectively located at two ends of the plurality of silicon steel sheets 120 in the axial direction A of the motor 10. The through holes 111 of the two end plates 110 respectively communicate with the adjacent cooling holes 121. End plates 110 are disposed on both end faces of the stator 100 in the axial direction A, so that when the insulated paint overflows to any end face of the stator 100, the end plate 110 can act as a barrier against the insulated paint, to reduce the risk that the insulated paint blocks the cooling hole 121.

The motor, the powertrain, and the vehicle provided in embodiments of this application are described in detail above. The principles and embodiments in this application are described in this specification by using specific examples. The descriptions about embodiments are only provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. A motor, wherein the motor comprises a stator, the stator comprises an end plate and a plurality of silicon steel sheets, the end plate and the plurality of silicon steel sheets are stacked in an axial direction of the motor, each of the silicon steel sheets comprises a cooling hole, the cooling hole penetrates the silicon steel sheet in the axial direction of the motor, and the cooling holes of the plurality of silicon steel sheets communicate with each other; and
the end plate comprises a through hole, the through hole penetrates the end plate in the axial direction of the motor, the through hole communicates with the cooling holes, a projection of the end plate in the axial direction of the motor is within a projection of the silicon steel sheet in the axial direction of the motor, a cross-sectional area of the end plate is less than a cross-sectional area of the silicon steel sheets, and a cross section of the end plate and cross sections of the silicon steel sheets are all perpendicular to the axial direction of the motor.

2. The motor according to claim 1, wherein a projection of the through hole in the axial direction of the motor at least partially overlaps a projection of the cooling hole of the adjacent silicon steel sheet in the axial direction of the motor.

3. The motor according to claim 1 or 2, wherein each of the silicon steel sheets comprises a yoke portion and a plurality of tooth portions that are spaced apart, and an end of each of the tooth portions in a radial direction of the motor is connected to an inner circumferential surface of the yoke portion; and
at least one of the yoke portion and the plurality of tooth portions comprises the cooling hole.

4. The motor according to claim 3, wherein there are a plurality of cooling holes, and in each of the silicon steel sheets, at least some of the cooling holes are distributed in at least some of the tooth portions;
the end plate comprises a body portion and a plurality of protrusions that are spaced apart, an end of each of the protrusions in the radial direction of the motor is connected to an inner circumferential surface of the body portion, the protrusion and the tooth portion are stacked in the axial direction of the motor, and the body portion and the yoke portion are stacked in the axial direction of the motor; and
there are a plurality of through holes, at least some of the through holes are distributed in the plurality of protrusions, and the at least some through holes respectively communicate with the at least some cooling holes of the adjacent silicon steel sheet.

5. The motor according to claim 4, wherein in the at least some through holes, a distance between the through hole and one end of the tooth portion in the radial direction of the motor is less than a distance between the through hole and the other end of the tooth portion in the radial direction of the motor.

6. The motor according to claim 4, wherein a length of the protrusion in a circumferential direction of the motor is less than a length of the tooth portion in the circumferential direction of the motor; and
a width of the protrusion in the radial direction of the motor is less than a width of the tooth portion in the radial direction of the motor.

7. The motor according to claim 4, wherein in each of the silicon steel sheets, some of the cooling holes are distributed in the yoke portion; and
some of the through holes are distributed in the body portion, and the some through holes respectively communicate with the some cooling holes of the adjacent silicon steel sheet.

8. The motor according to claim 7, wherein the yoke portion comprises the inner circumferential surface and an outer circumferential surface that are opposite to each other in the radial direction of the motor, and in the some through holes, a distance between the through hole and the inner circumferential surface in the radial direction of the motor is greater than a distance between the through hole and the outer circumferential surface in the radial direction of the motor.

9. The motor according to claim 4 or 7, wherein the body portion further comprises a flow guiding recess, the flow guiding recess is recessed from the inner circumferential surface of the body portion to an outer circumferential surface of the body portion, and at least a part of a projection of the flow guiding recess in the radial direction of the motor is between projections of two adjacent tooth portions in a circumferential direction of the motor in the radial direction of the motor.

10. The motor according to claim 4 or 7, wherein a width of the body portion in the radial direction of the motor is less than or equal to a width of the yoke portion in the radial direction of the motor; and
the width of the body portion in the radial direction of the motor is greater than or equal to a width of the protrusion in the radial direction of the motor.

11. The motor according to claim 7, wherein the at least some cooling holes in the tooth portions of each of the silicon steel sheets are sequentially spaced apart in a circumferential direction of the motor, the some cooling holes in the yoke portion of each of the silicon steel sheets are sequentially spaced apart in the circumferential direction of the motor, and a quantity of the at least some cooling holes is greater than or equal to a quantity of the some cooling holes; and
the at least some through holes in the plurality of protrusions are sequentially spaced apart in the circumferential direction of the motor, the some through holes in the body portion are sequentially spaced apart in the circumferential direction of the motor, and a quantity of the at least some through holes is greater than or equal to a quantity of the some through holes.

12. The motor according to claim 4, wherein the end plate comprises a plurality of body portions, the plurality of body portions are spaced apart in a circumferential direction of the motor, and each of the body portions is connected to at least one of the protrusions; and
a total length of the plurality of body portions in the circumferential direction of the motor is less than or equal to a length of the yoke portion in the circumferential direction of the motor.

13. The motor according to claim 3, wherein the cooling holes are distributed in the yoke portion, the end plate and the yoke portion are stacked in the axial direction of the motor, and the projection of the end plate in the axial direction of the motor is within a projection of the yoke portion in the axial direction of the motor;
a width of the end plate in the radial direction of the motor is less than or equal to a width of the yoke portion in the radial direction of the motor; and
a distance between the end plate and an outer circumferential surface of the yoke portion in the radial direction of the motor is less than or equal to a distance between the end plate and the inner circumferential surface of the yoke portion in the radial direction of the motor.

14. The motor according to claim 1, wherein the motor comprises a plurality of end plates, the plurality of end plates are stacked in the axial direction of the motor and located at a same end of the plurality of silicon steel sheets, and the through holes of the plurality of end plates communicate with each other; or
the motor comprises two end plates, the two end plates are respectively located at two ends of the plurality of silicon steel sheets in the axial direction of the motor, and the through holes of the two end plates respectively communicate with the adjacent cooling holes.

15. A powertrain, wherein the powertrain comprises a reducer and the motor according to any one of claims 1 to 14, the motor further comprises a stator winding, a rotor, and a motor shaft, the end plate and the silicon steel sheets of the stator are sleeved on the rotor, the rotor is sleeved and fastened on the motor shaft, the stator winding is configured to be wound between the tooth portions of the silicon steel sheets, and the stator winding is configured to receive an alternating current to drive the rotor to rotate, thereby driving the motor shaft to rotate; and the reducer comprises a reducer input shaft, and the motor shaft is in transmission connection with the reducer input shaft and configured to transmit power to the reducer input shaft.
